# EUROPÄISCHE PATENTSCHRIFT

(11) **EP 2 475 518 B1**
(45) Veröffentlichungstag und Bekanntmachung des Hinweises auf die Patenterteilung: **16.04.2014**
(21) Anmeldenummer: 10773545.8
(22) Anmeldetag: 09.09.2010
(51) Int. Cl.: B31F 1/00, B31B 3/28

(54) **VORRICHTUNG UND VERFAHREN ZUM VERPRESSEN**
DEVICE AND METHOD FOR PRESSING
DISPOSITIF ET PROCEDE DE COMPRESSION

(30) Priorität: 10.09.2009 DE 102009042057
(43) Veröffentlichungstag der Anmeldung: 18.07.2012
(73) Patentinhaber: SIG Technology AG, 8212 Neuhausen am Rheinfall (CH)
(72) Erfinder: VETTEN, Thomas, 40223 Düsseldorf (DE); SCHROIFF, Christoph, 50679 Köln (DE)
(74) Vertreter: Klickow, Hans-Henning
(86) Internationale Anmeldenummer: PCT/DE2010/001085
(87) Internationale Veröffentlichungsnummer: WO 2011/029438

(56) Entgegenhaltungen:
- WO-A1-98/56570
- FR-A- 1 207 015
- FR-A1- 2 315 384

## Beschreibung

Die Erfindung betrifft eine Vorrichtung zum Verpressen mindestens eines Bereiches einer Verpackung, die mindestens bereichsweise aus einem mehrschichtigen Verbundmaterial ausgebildet ist und bei der ein Presswerkzeug mindestens ein in einen Innenraum der Verpackung einfahrbares Konturelement und mindestens ein bezüglich des Innenraumes außenseitig angeordnetes und dem Konturelement gegenüberliegendes Presselement aufweist und bei der das Presselement und das Konturelement relativ zueinander positionierbar angeordnet sind.

Die Erfindung betrifft darüber hinaus ein Verfahren zum Verpressen mindestens eines Bereiches einer Verpackung, die mindestens bereichsweise aus einem mehrschichtigen Verbundmaterial ausgebildet wird und bei der zur Durchführung des Pressvorganges mindestens ein Konturelement eines Presswerkzeuges in einen Innenraum der Verpackung eingeführt wird und bei dem zur Durchführung des Pressvorganges mindestens ein bezüglich des Innenraumes außen angeordnetes und dem Konturelement gegenüberliegendes Presselement verwendet wird sowie bei dem das Presselement und das Konturelement relativ zueinander positioniert werden.

Bei der Herstellung von Mehrschichtverbundpackungen, beispielsweise Getränkepackungen, werden unterschiedliche Verfahren angewandt. Erfolgt die Herstellung aus einer endlosen Verbundmaterialbahn mittels sogenannter "Schlauchformungsmaschinen", so wird der Packungsboden erst nach dem Füllen und Verschließen der Packung hergestellt. Erfolgt die Herstellung jedoch aus einzelnen Zuschnitten aus einem Karton/Kunststoff-Verbundmaterial, so werden diese Zuschnitte zunächst mit einer Längsnaht versehen, was in der Regel beim Packstoffhersteller erfolgt. Die Längsnähte werden durch Faltung eines Längsrandes des Packungsmaterials erzeugt. Sie dienen dazu, dass ein beispielsweise in die Verpackung zu füllendes Getränk nicht mit offenen Kanten des Verbundmaterials in Kontakt kommt. Ein solcher Kontakt könnte zu einer Aufweichung des Verpackungsmaterials und zu einer verringerten Haltbarkeit eines in der Packung abgefüllten Lebensmittels führen. Die Fertigung des Packungsbodens erfolgt bei den mit der Längsnaht versehenen Zuschnitten, den sogenannten "Packungsmänteln", erst unmittelbar vor dem Füllvorgang, und zwar meist direkt in der Füllmaschine.

Zur Herstellung des Packungsbodens werden die vereinzelten und gegebenenfalls vorgefalteten Packungsmäntel üblicherweise auf Dorne eines Dornrades geschoben, wobei die Dorne gleichmäßig über den Umfang einer Dornradwelle verteilt angeordnet sind. Je nach Anzahl der um das Dornrad herum angeordneten Bearbeitungsstationen erfolgt ein taktweises Drehen des Dornrades. Bei vier vorhandenen Dornen wird beispielsweise in einer ersten Station der Packungsmantel aufgeschoben, und es erfolgt nach einer 90°-Drehung in einer zweiten Station die Faltung des Packungsbodens. Nach der Faltung des Packungsbodens liegen zumindest abschnittsweise mehrere Lagen von Verbundmaterial übereinander.

Nach einer weiteren 90°-Drehung wird dann in der dritten Station der flach gefaltete Packungsboden versiegelt, indem die übereinander liegenden Lagen mit dem unter einer erhöhten Temperatur erweichten Kunststoff des Verbundmaterials mittels Druck zu einem eine Standfläche aufweisenden Pakkungsboden geformt werden. Dabei werden Lagen des Packungsbodens, die durch das Falten des Bodens übereinander liegen, mit der Oberfläche einer geeigneten Vorrichtung von der Bodenaußenseite gegen den an der Bodeninnenseite anliegenden Dorn verpresst. Der ausgeübte Druck führt aufgrund des durch die Erwärmung erweichten Kunststoffs zu einer Verpressung der Lagen und einer Versiegelung des Bodens.

Das für das Verpressen und Versiegeln erforderliche Erwärmen der Lagen kann beispielsweise vor dem Falten des Pakkungsbodens erfolgen. Es ist jedoch auch denkbar, dass das Erwärmen des Kunststoffs nach dem Falten des Packungsbodens erfolgt. Durch das Verpressen und Versiegeln des Packungsbodens wird außerdem eine leichte Einwölbung zur Innenseite des Bodens erzeugt, die der herzustellenden Verpackung eine besonders gute Standfestigkeit verleiht.

Nach dem Versiegeln wird der Packungsboden abgekühlt, um den erweichten Kunststoff in der gewünschten Form zu erhärten. Dies kann in der vorbeschriebenen Siegelstation erfolgen, oder aber in einer separaten Station. Schließlich wird die fertige, einseitig offene Packung vom Dorn des Dornrades abgezogen und der eigentlichen Füllmaschine zugeführt, wo das Packungsinnere gereinigt und gegebenenfalls desinfiziert wird und das Befüllen und Verschließen der fertigen Packung sowie die Formgebung des Packungskopfes erfolgen.

Der gefaltete Packungsboden weist nach der Faltung eine über seine Fläche variierende Stärke auf. Der Grund dafür ist, dass im Zuge der Faltung in verschiedenen Bereichen des Bodens unterschiedlich viele Lagen des gefalteten Verbundmaterials übereinander liegen. Bei einem Verpressen und Versiegeln der Lagen des gefalteten Bodens mit einer ebenen Pressoberfläche einer Pressvorrichtung, wobei die Pressoberfläche Bodenbereiche unterschiedlicher Stärke überdeckt, besteht somit das Problem, dass verschiedene Bereiche des Bodens unterschiedlich stark verpresst und versiegelt werden. Insbesondere werden die Lagen in Bereichen mit im Vergleich zu den angrenzenden Bereichen geringer Stärke oft nur unzureichend verpresst.

Zur Lösung dieses Problems sind Vorrichtungen zum Verpressen der Lagen des Packungsbodens bekannt, die in bestimmten Bereichen ihrer für das Pressen eingesetzten Oberfläche aus der Oberfläche herausragende Presselemente aufweisen. Diese Presselemente sind derart auf der Oberfläche der Pressvorrichtung angeordnet, dass sie beim Verpressen des Bodens den Bodenbereichen zugeordnet sind, die im Vergleich zu benachbarten Bodenbereichen eine geringe Stärke aufweisen. Die Presselemente dienen dazu, die Lagen in diesen Bereichen im Zuge des Pressvorgangs ausreichend zu verpressen und somit zu versiegeln.

Es ist bekannt, diese Presselemente als kantige Rippen auszubilden. Bei einem Einsatz dieser Rippen kann es in der Praxis jedoch zu Verletzungen des Packungsbodens kommen. Undichtigkeiten des Bodens können die Folge sein. Die kantigen Presselemente führen außerdem zu einer verstärkten Verschmutzung des Packungsbodens, da sich an dem in dem Boden erzeugten Pressprofil leicht Schmutz ansammeln kann.

Hinzu kommt, dass der Boden aufgrund der Faltung im Bereich der Längsnähte gegenüber angrenzenden Bereichen eine größere Stärke aufweist. Dies muss bei der Ausgestaltung der Oberfläche der Pressvorrichtung berücksichtigt werden. Bei der Faltung der Längsnähte kommt es immer wieder zu Toleranzen im Verlauf sowie der Stärke und Höhe der Längsnähte. Ein Ausgleich solcher Toleranzen kann mit der bekannten Vorrichtung teilweise nur unzureichend bewerkstelligt werden.

Ebenfalls ist es bereits bekannt, zur Erreichung von gleichmäßigen Presskräften sowie zur Vermeidung zu hoher Presskräfte elastische Druckkissen zu verwenden, die beispielsweise im Bereich von aufeinander aufliegenden Lagen der Verpackung elastisch eingedrückt werden und hierdurch die Aufbringung von zu großen Presskräften in diesen Bereichen vermeiden. Die entsprechenden Kanten oder stufenartigen Übergänge im Bereich der zu verpressenden Materialien führen aber bei derartigen elastischen Druckkissen zu einem erhöhten Verschleiß, so dass sich sowohl unter Berücksichtigung des erforderlichen häufigen Auswechselns derartiger Druckkissen als auch unter Berücksichtigung des durch den Verschleiß entstehenden Abriebes die verwendung derartiger Einrichtungen nicht durchsetzen konnte.

Als Stand der Technik sind die WO 98/56570 A1, die FR 2 315 384 A1 und die FR 1 207 015 A bekannt geworden.

Aufgabe der vorliegenden Erfindung ist es, eine Vorrichtung der einleitend genannten Art derart zu konstruieren, dass eine optimale Einbringung von Presskräften sowie eine lange Verwendungsfähigkeit unterstützt werden.

Diese Aufgabe wird erfindungsgemäß dadurch gelöst, dass das Presselement eine elastische Konsistenz aufweist und mindestens im Bereich seiner dem Konturelement zugewandten Ausdehnung mit einer flexiblen Verstärkungseinrichtung versehen ist.

Weitere Aufgabe der vorliegenden Erfindung ist es, ein Verfahren der einleitend genannten Art derart zu verbessern, dass die Einbringung der Presskräfte optimiert und eine lange Verwendungsfähigkeit unterstützt wird.

Diese Aufgabe wird erfindungsgemäß dadurch gelöst, dass ein Presselement mit einer elastischen Konsistenz verwendet wird und dass das Presselement mindestens im Bereich seiner dem Konturelement zugewandten Ausdehnung mit einer flexiblen Verstärkungseinrichtung versehen wird.

Erfindungsgemäß werden die nachgiebigen Eigenschaften eines Presselementes mit einem erhöhten Verschleißschutz kombiniert. Durch das elastische Presselement wird gewährleistet, dass im Bereich von einander überlappenden Lagen oder von vorstehenden Konturbereichen weder zu hohe noch zu geringe Presskräfte erzeugt werden. Gleichzeitig wird aber ein durch entsprechende stufenförmige oder winklige Bodenkonturen verursachter Verschleiß am elastischen Presselement durch die flexible Verstärkungseinrichtung vermieden. Die flexiblen Eigenschaften der verstärkungseinrichtung führen zu einer ausreichenden Anschmiegung an die gewünschte Bodenkontur und die Verstärkungseinrichtung kann hierdurch einer elastischen Verformung des Presselementes folgen.

Die Verwendung der erfindungsgemäßen Presseinrichtung ermöglicht es darüber hinaus, Positionstoleranzen der unterschiedlichen Laminatlagen zu berücksichtigen. Auch bei Weiter auf Seite 7 der Ursprungsunterlagen variierenden Positionierungen des Überganges zwischen den Laminatlagen wird durch das flexible Presselement eine optimierte Einbringung der Presskräfte unterstützt. Unabhängig von der konkreten Geometrie des Bodenbereiches werden somit zum einen zu hohe und materialschädigende Presskräfte vermieden, darüber hinaus werden aber auch zu geringe Presskräfte vermieden, die zu nicht vollständig verschweißten Bodenbereichen führen und somit Undichtigkeiten zur Folge haben können.

Die Kombination aus dem elastischen Presselement sowie der flexiblen Verstärkungseinrichtung unterstützt die optimierte Durchführung der Pressvorgänge auch bei schnellen Wechseln der Lastspiele, beispielsweise bei der Durchführung von 1000 oder mehr Pressvorgängen pro Stunde.

Eine besonders bewegliche Struktur wird dadurch bereitgestellt, daß die Verstärkungseinrichtung aus einer Vielzahl ringartiger Verstärkungselemente ausgebildet ist. Diese können mindestens zum Teil ineinandergreifen.

Eine gleichmäßige Beweglichkeit in allen drei räumlichen Dimensionen wird dadurch unterstützt, daß die Verstärkungselemente eine im wesentlichen kreisringförmige Gestaltung aufweisen.

Eine besonders hohe Verschleißfestigkeit läßt sich dadurch erreichen, daß die Verstärkungseinrichtung mindestens bereichsweise aus Metall ausgebildet ist.

Gemäß einer typischen Ausführungsform ist vorgesehen, daß die Verstärkungseinrichtung im Bereich einer Oberfläche des Presselementes angeordnet ist.

Eine einfache Handhabung des Presselementes wird dadurch unterstützt, daß die Verstärkungseinrichtung mindestens bereichsweise in das Presselement eingebettet ist.

Gemäß einer weiteren Ausführungsvariante ist auch daran gedacht, daß die Verstärkungseinrichtung mindestens bereichsweise mit einem Abstand zum Presselement angeordnet ist.

Eine typische Anwendung wird dadurch definiert, daß das Presswerkzeug zur Versiegelung einander überlappender Laschen der Verpackung ausgebildet ist. Diese können im Bereich eines Bodens der Verpackung angeordnet sein.

In den Zeichnungen sind Ausführungsbeispiele der Erfindung schematisch dargestellt. Es zeigen:
- Fig. 1: eine teilweise Darstellung eines Querschnittes durch eine Pressvorrichtung mit zugeordnetem behälterartigen Verbundmaterial in einem unverpressten Zustand des Bodens,
- Fig. 2: eine abgewandelte Darstellung einer Presseinrichtung mit pneumatischem Druckkissen,
- Fig. 3: eine Ausführungsform mit einem in Richtung der Presskräfte nachgiebig gelagerten Presselement,
- Fig. 4: eine teilweise Darstellung einer flexiblen Verstärkungseinrichtung, die aus ringartig miteinander verbundenen Verstärkungselementen ausgebildet ist,
- Fig. 5: eine detailliertere Darstellung einer Presseinrichtung,
- Fig. 6: eine perspektivische Darstellung der Presseinrichtung gemäß Fig. 5 nach einem Entfernen des Presselementes und
- Fig. 7: eine weitere Darstellung zur Veranschaulichung einer Zuordnung des elastischen Presselementes, der flexiblen Verstärkungseinrichtung sowie einander überlappender Lagen des zu verpressenden Materials.

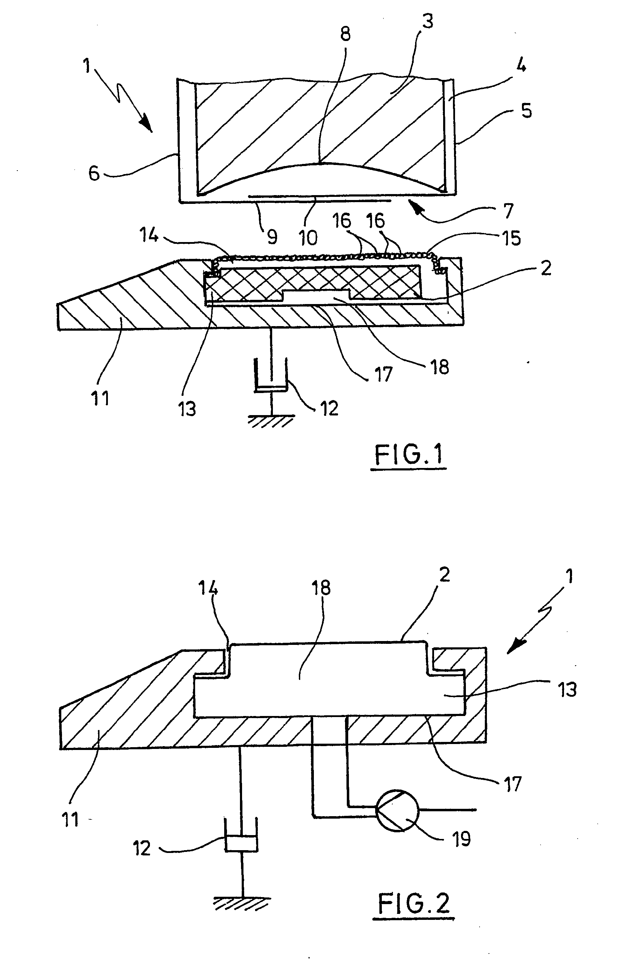

Gemäß der Ausführungsform in Fig. 1 besteht ein Presswerkzeug (1) im wesentlichen aus einem Presselement (2) und einem dem Presselement (2) gegegenüberliegend angeordneten Konturelement (3). Das Konturelement (3) ist von einer nicht dargestellten Positioniereinrichtung in einen Innenraum (4) einer Verpackung (5) einführbar. Die Verpackung (5) ist vorzugsweise als eine gefaltete Verpackung aus einem laminatartigen Material ausgebildet und weist Seitenwandungen (6) sowie einen Boden (7) auf. Das Material der Verpackung (5) besteht vorzugsweise aus mehreren Lagen des Laminates, wobei mindestens eine Lage aus Kunststoff und mindestens eine Lage aus Karton zweckmäßig ist. Zur Erreichung von Barriereeigenschaften wird typischerweise darüber hinaus eine Aluminiumschicht eingesetzt.

Aus Fig. 1 ist zu erkennen, daß das Konturelement (3) im Bereich seiner dem Boden (7) zugewandten Ausdehnung eine Formkontur (8) aufweist. Beim dargestellten Ausführungsbeispiel dient die Formkontur (8) zur Bereitstellung eines in Richtung auf den Innenraum (4) eingewölbten Bodens (7). Fig. 1 zeigt den Boden (7) vor einer Durchführung des Pressvorganges. Es sind zwei einander teilweise überdeckende Laschen (9, 10) des Materials des Bodens (7) zu erkennen, die bei der Durchführung des Pressvorganges miteinander verbunden werden.

Das Presselement (2) ist gemäß Fig. 1 in einem Sockel (11) angeordnet. Der Sockel (11) ist vorzugsweise von einer Positioniereinrichtung (12) in eine dem Konturelement (3) zugewandte Richtung bzw. in einer entgegengesetzten Richtung positionierbar. Gemäß dem dargestellten Ausführungsbeispiel ist das Presselement (2) in eine Vertiefung (13) des Sockels (11) eingesetzt. Eine Öffnung (14) der Vertiefung (13) ist in Richtung auf das Konturelement (3) angeordnet.

Beim dargestellten Ausführungsbeispiel besteht das Presselement (2) aus einem Kunststoff, der einlagig oder mehrlagig ausgebildet sein kann. Insbesondere ist vorgesehen, das Presselement (2) aus einem elastischen Material auszubilden. Entlang einer dem Konturelement (3) zugewandten Oberfläche des Presselementes (2) erstreckt sich mindestens bereichsweise eine Verstärkungseinrichtung (15). Die Verstärkungseinrichtung (15) ist vorzugsweise aus einzelnen Verstärkungselementen (16) zusammengesetzt, die miteinander verbunden sind. Typischweise bestehen die Verstärkungselemente (16) aus Metall.

Aus Fig. 1 ist ebenfalls zu erkennen, daß das Presselement (2) im Bereich seiner einer Grundfläche (17) des Sockels (11) zugewandten Ausdehnung einen Druckraum (18) aufweist. Der Druckraum (18) kann mit Druckluft oder einem anderen Fluid beaufschlagt werden, um eine Relativbewegung zwischen dem Presselement (2) und dem Sockel (11) vorzugeben.

Gemäß der Ausführungsform in Fig. 2 ist das Presselement (2) als eine Membran ausgeführt, die druckdicht mit dem Sockel (11) verbunden ist. In die Membran ist das Verstärkungselement (16) vorzugsweise eingearbeitet. Grundsätzlich ist es aber ähnlich wie gemäß der Ausführungsform in Fig. 1 auch denkbar, daß sich die Verstärkungseinrichtung (15) zwischen der Membran und dem Boden (7) erstreckt. Der Druckraum (18) ist bei dieser Ausführungsform unter Verwendung einer Druckquelle (19) von einem geeigneten Fluid beaufschlagbar, beispielsweise durch Druckluft, Wasser oder Öl. Gemäß einer anderen Ausführungsform besteht das Preßelement (2) aus einem inkompressiblen aber zugleich elastischen Material.

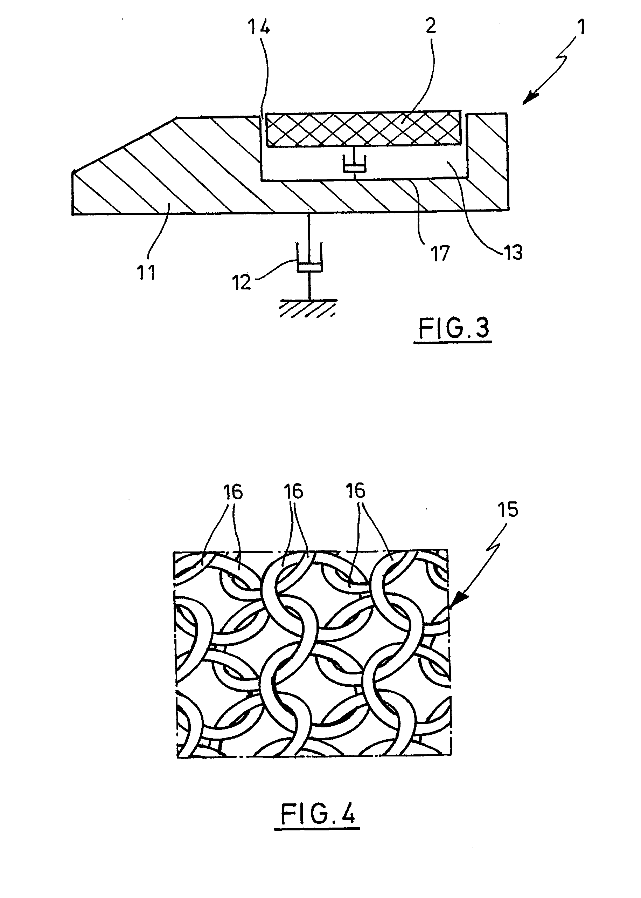

Fig. 3 zeigt eine teilweise Darstellung eines Presswerkzeuges (1), bei dem das Presselement (2) durch eine separate Positioniereinrichtung (20) relativ zum Sockel (11) verstellbar ist. Der Grundaufbau entspricht im wesentlichen den Ausführungsformen in Fig. 1 und Fig. 2.

Fig. 4 zeigt eine bevorzugte Ausführungsform zur Realisierung der Verstärkungseinrichtung (15). Es ist zu erkennen, daß eine Vielzahl ringartiger Verstärkungselemente (16) netzartig miteinander verbunden sind. Die ineinander eingreifenden ringförmigen Strukturen führen zu einer sehr hohen Flexibilität und Beweglichkeit der Verstärkungseinrichtung (15). Die Verstärkungseinrichtung (15) kann sich hierdurch problemlos an stufenartige Verläufe oder an knickartige Richtungsänderungen von Bezugsflächen anpassen.

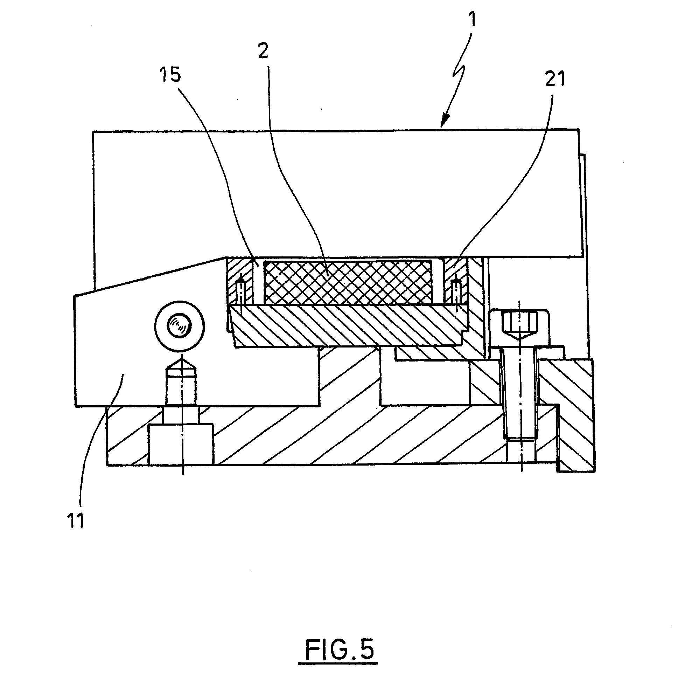

Fig. 5 zeigt eine stärker detailliertere Darstellung eines Presswerkzeuges (1) ähnlich zur Darstellung in Fig. 1. Zur Halterung des Presselementes (2) im Bereich des Sockels (11) wird hierbei ein Rahmen (21) verwendet. Das Presselement (2) kann bei dieser Ausführungsform aus einem Kunststoff bestehen. Die in Fig. 4 dargestellten Ver-stärkungselemente (16) weisen näherungsweise eine kreisringartige Struktur auf.

Die dargestellten kreisringförmigen Strukturen besitzen eine besonders gleichmäßige Beweglichkeit der einzelnen Verstärkungselemente (16) relativ zueinander.

Alternativ zu der in Fig. 1 dargestellten Anordnung des Verstärkungselementes (16) neben dem Presselement (2), gegebenenfalls direkt auf einer Oberfläche des Presselementes (2) aufliegend oder mit einem Abstand hierzu, ist auch daran gedacht, die Verstärkungseinrichtung (15) ganz oder teilweise in das Material des Presselementes (2) einzubetten. Dies kann beispielsweise bei einer spritzgußtechnischen Herstellung des Presselementes (2) durch ein Umspritzen oder bei der Verwendung von elastomeren Materialien durch die Vulkanisation erfolgen.

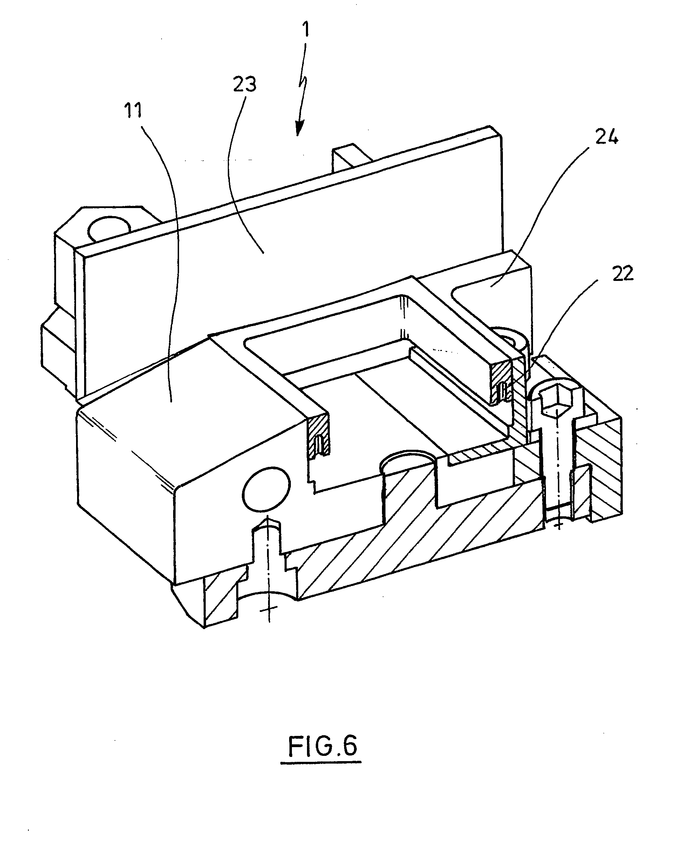

Die Darstellung in Fig. 6 zeigt das Presswerkzeug (1) gemäß Fig. 5 in einer prespektivischen Darstellung und nach einer Demontage des Presselementes (2). Es ist insbesondere zu erkennen, daß der Rahmen (21) Bohrungen (22) zur Aufnahme von Spannstiften aufweist, um bei einer vom Presselement (2) separaten Ausbildung der Verstärkungseinrichtung (15) diese Verstärkungseinrichtung (15) zu haltern. Darüber hinaus sind ein seitliches Führungselement (23) mit einer Nut zur Aufnahme des Rahmens (21) sowie ein Deckel (24) zum Fixieren zu erkennen.

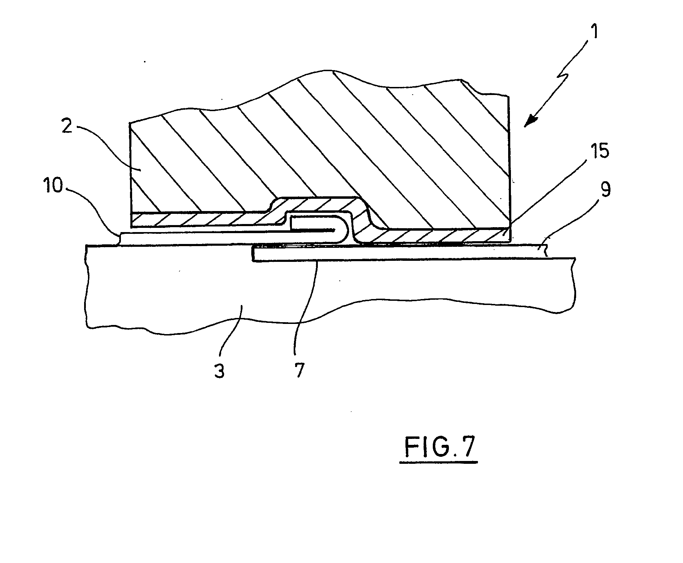

Fig. 7 veranschaulicht nochmals eine typische Durchführung eines Pressvorganges zur Verbindung von zwei Laschen (9, 10) eines Bodens (7). Die Lasche (10) ist hierbei im Überlappungsbereich mit der Lasche (9) zusätzlich umgebogen, um eine frei vorstehende Schnittkante zu vermeiden. Es ist zu erkennen, daß sich die Verstärkungseinrichtung (15) problemlos dem stufenförmigen Konturverlauf anpaßt und hierdurch das elastische Presselement (2) vor Verschleißeffekten schützt.

Die Verwendung der aus den ringartigen Verstärkungselementen (16) bestehenden Verstärkungseinrichtung (15) weist zusätzlich zum Schutz des Presselementes (2) vor einem abrasiven Verschleiß auch noch weitere Vorteile auf. Insbesondere wird die Qualität des Pressvorganges positiv beeinflußt. Durch die ringförmige Kontur der Verstärkungselemente (16) liegt zu einem Beginn des Pressvorganges ein punkt- oder linienartiger Kontakt zum zu pressenden Werkstück vor. Die Presskräfte werden somit zunächst von einer sehr kleinen Kontaktfläche übertragen, was dazu führt, daß der zu verpressende Werkstoff im Bereich dieser sehr kleinen Fläche plastisch verformt wird. Dies resultiert daraus, daß sich die dem zu pressenden Werkstück zugewandten gerundeten Oberflächenkonturen der Verstärkungselemente (16) in das zu verpressende Material hineindrücken.

Mit steigenden Presskräften und zunehmender Eindringtiefe der Verstärkungselemente (16) in das zu verpressende Material steigt sehr schnell die Größe der die Kräfte übertragenden Flächen an, so daß ein ungewolltes weiteres Eindringen der Verstärkungselemente (16) in das zu verpressende Material unterbleibt. Durch die vergrößernde Kontaktfläche reduziert sich somit die resultierende Flächenpressung. Der Pressvorgang geht dann von einer elastisch-plastischen in eine elastische Materialverformung über.

Während der ersten Pressphase wird durch die plastische Verformung ein Fließen des Werkstoffes generiert, das insbesondere im Bereich von Vorsprungschatten der stufenförmigen Konturen ein Verkleben der Laschen (9, 10) unterstützt und hierdurch zu einer vergrößerten Dichtigkeit der Verpackung (5) führt. Die Verwendung der erfindungsgemäßen Verstärkungseinrichtung (15) ermöglicht somit auch unter Berücksichtigung auftretender Lagetoleranzen eine Optimierung des Pressvorganges.

Die ringartige Verbindung der einzelnen Verstärkungselemente (16) zur Bereitstellung der Verstärkungseinrichtung (15) führt zu der hohen Konturanpaßbarkeit insbesondere dadurch, daß die einzelnen Verstärkungselemente (16) in allen drei räumlichen Dimensionen relativ zueinander beweglich sind. Die Verstärkungselemente (16) können hierbei sowohl in einer Ebene in einer Quer- als auch in einer Längsrichtung ineinander geschoben werden, darüber hinaus können die einzelnen Verstärkungselemente (16) ohne nennenswerte Rückstellkräfte relativ zueinander aus einer Bezugsebene heraus geschwenkt werden.

Dies führt dazu, daß auch problemlos eine Konturanpassung an kantige Verläufe erfolgen kann. Insbesondere bei einer Verwendung von faserartigem oder strangartigem Material für die Verstärkungselemente (16) wäre eine derartige optimale Flexibilität nicht gegeben, da hier elastische Rückstellkräfte vorliegen. Die erfindungsgemäße Verstärkungseinrichtung (15) besteht deshalb bevorzugt aus vergleichsweise klein dimensionierten Verstärkungselementen (16), die gelenkig ineinander eingreifen.

## Patentansprüche

1. Vorrichtung zum Verpressen mindestens eines Bereiches einer Verpackung, die mindestens bereichsweise aus einem mehrschichtigen Verbundmaterial ausgebildet ist und bei der ein Presswerkzeug mindestens ein in einen Innenraum der Verpackung einführbares Konturelement und mindestens ein bezüglich des Innenraumes außenseitig angeordnetes und dem Konturelement gegenüberliegendes Presselement aufweist und bei der das Presselement und das Konturelement relativ zueinander positionierbar angeordnet sind, **dadurch gekennzeichnet, dass** das Presselement (2) eine elastische Konsistenz aufweist und mindestens im Bereich seiner dem Konturelement (3) zugewandten Ausdehnung mit einer flexiblen Verstärkungseinrichtung (15) versehen ist.

2. Vorrichtung nach Anspruch 1, **dadurch gekennzeichnet, dass** die Verstärkungseinrichtung (15) aus einer Vielzahl ringartiger Verstärkungselemente (16) ausgebildet ist.

3. Vorrichtung nach Anspruch 2, **dadurch gekennzeichnet, dass** die ringartigen Verbindungselemente mindestens zum Teil ineinandergreifen.

4. Vorrichtung nach Anspruch 2 oder 3, **dadurch gekennzeichnet, dass** die Verstärkungselemente (16) eine im wesentlichen kreisringförmige Gestaltung aufweisen.

5. Vorrichtung nach einem der Ansprüche 1 bis 4, **dadurch gekennzeichnet, dass** die Verstärkungseinrichtung (15) mindestens bereichsweise aus Metall ausgebildet ist.

6. Vorrichtung nach einem der Ansprüche 1 bis 5, **dadurch gekennzeichnet, dass** die Verstärkungseinrichtung (15) im Bereich einer Oberfläche des Presselementes (2) angeordnet ist.

7. Vorrichtung nach einem der Ansprüche 1 bis 6, **dadurch gekennzeichnet, dass** die Verstärkungseinrichtung (15) mindestens bereichsweise in das Presselement (2) eingebettet ist.

8. Vorrichtung nach einem der Ansprüche 1 bis 7, **dadurch gekennzeichnet, dass** die Verstärkungseinrichtung (15) mindestens bereichsweise mit einem Abstand zum Presselement (2) angeordnet ist.

9. Vorrichtung nach einem der Ansprüche 1 bis 8, **dadurch gekennzeichnet, dass** das Presswerkzeug (1) zur Versiegelung einander überlappender Laschen (9, 10) der Verpackung (5) ausgebildet ist.

10. Vorrichtung nach einem der Ansprüche 1 bis 9, **dadurch gekennzeichnet, dass** das Presswerkzeug (1) zur Beaufschlagung mindestens eines Teiles eines Bodens (7) der Verpackung (5) ausgebildet ist.

11. Verfahren zum Verpressen mindestens eines Bereiches einer Verpackung, die mindestens bereichsweise aus einem mehrschichtigen Verbundmaterial ausgebildet wird und bei der zur Durchführung des Pressvorganges mindestens ein Konturelement eines Presswerkzeuges in einen Innenraum der Verpackung eingeführt wird und bei dem zur Durchführung des Pressvorganges mindestens ein bezüglich des Innenraumes außen angeordnetes und dem Konturelement gegenüberliegendes Presselement verwendet wird sowie bei dem das Presselement und das Konturelement relativ zueinander positioniert werden, **dadurch gekennzeichnet, dass** ein Presselement (2) mit einer elastischen Konsistenz verwendet wird und dass das Presselement (2) mindestens im Bereich seiner dem Konturelement (3) zugewandten Ausdehnung mit einer flexiblen Verstärkungseinrichtung (15) versehen wird.

## Claims

1. A device for pressing at least one region of a packaging, which is constructed, at least in some regions, from a multilayer composite material and in which a pressing tool has at least one contouring element which can be introduced into an interior of the packaging and at least one pressing element which is arranged on the outside in relation to the interior and is opposite the contouring element, and in which the pressing element and the contouring element are arranged such that they can be positioned relative to one another, **characterised in that** the pressing element (2) has an elastic consistency and is provided with a flexible reinforcing means (15) at least in the region of its extent facing the contouring element (3).

2. A device according to Claim 1, **characterised in that** the reinforcing means (15) is constructed from a plurality of ring-like reinforcing elements (16).

3. A device according to Claim 2, **characterised in that** the ring-like connecting elements engage at least in part with one another.

4. A device according to Claim 2 or 3, **characterised in that** the reinforcing elements (16) have a substantially circular design.

5. A device according to one of Claims 1 to 4, **characterised in that** the reinforcing means (15) is constructed, at least in some regions, from metal.

6. A device according to one of Claims 1 to 5, **characterised in that** the reinforcing means (15) is arranged in the region of a surface of the pressing element (2).

7. A device according to one of Claims 1 to 6, **characterised in that** the reinforcing means (15) is embedded, at least in some regions, in the pressing element (2).

8. A device according to one of Claims 1 to 7, **characterised in that** the reinforcing means (15) is arranged, at least in some regions, at a spacing from the pressing element (2).

9. A device according to one of Claims 1 to 8, **characterised in that** the pressing tool (1) is constructed to seal mutually overlapping flaps (9, 10) of the packaging (5).

10. A device according to one of Claims 1 to 9, **characterised in that** the pressing tool (1) is constructed to act on at least part of a base (7) of the packaging (5).

11. A process for pressing at least one region of a packaging, which is constructed, at least in some regions, from a multilayer composite material and in which, for carrying out the pressing procedure, at least one contouring element of a pressing tool is introduced into an interior of the packaging and in which, for carrying out the pressing procedure, at least one pressing element, which is arranged on the outside in relation to the interior and is opposite the contouring element, is used, and in which the pressing element and the contouring element are positioned relative to one another, **characterised in that** a pressing element (2) with an elastic consistency is used and **in that** the pressing element (2) is provided with a flexible reinforcing means (15) at least in the region of its extent facing the contouring element (3).

## Revendications

1. Dispositif qui est destiné à comprimer au moins une zone d'un emballage qui consiste, au moins par sections, en matériau stratifié à plusieurs couches, et dans lequel un outil de pression est doté d'au moins un élément de contour qui peut être introduit dans l'emballage, et d'au moins un élément de compression qui est disposé à l'extérieur par rapport à l'espace intérieur et opposé à l'élément de contour, et dans lequel l'élément de pression et l'élément de contour peuvent être positionnés l'un par rapport à l'autre, **caractérisé en ce que** l'élément de pression (2) présente une consistance élastique et est doté, au moins dans la région de son étendue orientée vers l'élément de contour (3), d'un dispositif de renforcement (15) flexible.

2. Dispositif selon la revendication 1, **caractérisé en ce que** le dispositif de renforcement (15) est formé par une pluralité d'éléments de renforcement (16) en forme de bagues.

3. Dispositif selon la revendication 2, **caractérisé en ce que** les éléments de liaison en forme de bagues s'engagent, au moins en partie, les uns dans les autres.

4. Dispositif selon revendication 2 ou 3, **caractérisé en ce que** les éléments de renforcement (16) sont réalisés sensiblement en forme d'anneaux de cercles.

5. Dispositif selon l'une des revendications 1 à 4, **caractérisé en ce que** le dispositif de renforcement (15) est réalisé, au moins par sections, en métal.

6. Dispositif selon l'une des revendications 1 à 5, **caractérisé en ce que** le dispositif de renforcement (15) est disposé dans la région d'une surface de l'élément de compression (2).

7. Dispositif selon l'une des revendications 1 à 6, **caractérisé en ce que** le dispositif de renforcement (15) est noyé, au moins par sections, dans l'élément de compression (2).

8. Dispositif selon l'une des revendications 1 à 7, **caractérisé en ce que** le dispositif de renforcement (15) est disposé, au moins par sections, à distance de l'élément de compression (2).

9. Dispositif selon l'une des revendications 1 à 8, **caractérisé en ce que** l'outil de compression (1) est conçu pour sceller ensemble deux pattes (9, 10) de l'emballage (5) qui se chevauchent.

10. Dispositif selon l'une des revendications 1 à 9, **caractérisé en ce que** l'outil de compression (1) est conçu pour agir sur au moins une partie d'un fond (7) de l'emballage (5).

11. Procédé de compression d'au moins une zone d'un emballage qui consiste, au moins par sections, en matériau stratifié à plusieurs couches, et dans lequel, pour l'exécution du processus de compression, au moins un élément de contour d'un outil de compression est introduit dans un espace intérieur de l'emballage, et dans lequel, pour l'exécution du processus de compression, on utilise au moins un élément de compression qui est disposé à l'extérieur par rapport à l'espace intérieur et à l'opposé de l'élément de contour, ainsi que dans lequel l'élément de compression et l'élément de contour sont positionnés l'un par rapport à l'autre, **caractérisé en ce que** l'on utilise un élément de compression (2) de consistance élastique et que l'élément de compression (2) est doté, au moins dans la région de son étendue orientée vers l'élément de contour (3), d'un dispositif de renforcement (15) flexible.
